Europäisches Patentamt

European Patent Office

Office européen des brevets

(19)

(11) Veröffentlichungsnummer: **0 185 129**

A1

(12) **EUROPÄISCHE PATENTANMELDUNG**

(21) Anmeldenummer: 84890248.2

(22) Anmeldetag: 18.12.84

(51) Int. Cl.⁴: **B 23 Q 1/24**
**B 24 B 5/42**

(43) Veröffentlichungstag der Anmeldung:
25.06.86 Patentblatt 86/26

(84) Benannte Vertragsstaaten:
AT DE FR GB IT

(71) Anmelder: GFM Gesellschaft für Fertigungstechnik und
Maschinenbau Gesellschaft m.b.H.
Ennserstrasse 14
A-4403 Steyr(AT)

(72) Erfinder: Kimberger, Franz
Azwangerstrasse 24
A-4400 Steyr(AT)

(72) Erfinder: Strasser, Johann

A-4484 Kronstorf Nr. 135(AT)

(74) Vertreter: Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7
A-4020 Linz(AT)

(54) Verfahren und Vorrichtung zu spanenden Bearbeiten von Kurbelwellen.

(57) Zum spanenden Behandeln von Kurbelwellen (K) wird
das Werkzeug zur Aufnahme der auftretenden Kräfte in den
Endbereichen gespannt und vorzugsweise an wenigstens
einer weiteren Stelle radial abgestützt.

Um eine Bearbeitung mit höchster Genauigkeit zu
ermöglichen, wird das Werkstück (K) zusätzlich zumindest
zwischen zwei Kurbelwangen (W) axial gegen eine biegebedingte Lageänderung dieser Kurbelwangen (W) verspreizt.
Dazu sind zwei zwischen die Kurbelwangen (W) einführbare,
in Richtung der Werkstückachse schwimmend auf einem
Träger (4) gelagerte Spreizbacken (7) vorgesehen, die mittels
eines Stelltriebes (10) gegensinnig verstellt und über eine
Klemmeinrichtung in Spreizstellung fixiert werden können.

FIG. 3

— 1 —

## Verfahren und Vorrichtung zum spanenden Bearbeiten von Kurbelwellen

Die Erfindung betrifft ein Verfahren zum spanenden Bearbeiten von Kurbelwellen, bei dem das Werkstück zur Aufnahme der auftretenden Kräfte in den Endbereichen gespannt und vorzugsweise an wenigstens einer weiteren Stelle radial abgestützt wird, sowie eine Vorrichtung zum Durchführen dieses Verfahrens.

Um Kurbelwellen mit entsprechend hoher Genauigkeit bearbeiten zu können, muß ein Durchbiegen der Werkstücke unter Schwerkraftbelastung und Schnittkraftbelastung möglichst vermieden werden, wozu in den meisten Fällen die endseitige Spannung der Werkstücke, sei es durch eine einfache Aufnahme zwischen Spitzen oder auch durch ein Festspannen in Spannfuttern, allein nicht genügt, sondern zusätzlich mehrere radiale Abstützungen notwendig wären. Da aber schon aus Platzgründen die Zahl der setzbaren Lünetten zur radialen Werkstückabstützung eng begrenzt ist und daher mit wenigen Lünetten das Auslangen gefunden werden muß, läßt sich einer Werkstückdurchbiegung auf Grund der auftretenden Kräfte zwischen den Einspann- bzw. Abstützstellen bisher nur unzureichend entgegenwirken, was eine Bearbeitung gesteigerter Präzision ausschließt.

Der Erfindung liegt daher die Aufgabe zugrunde, diese Mängel zu beseitigen und ein Verfahren der eingangs geschilderten Art anzugeben, nach dem eine auch den höchsten Genauigkeitsanforderungen und Toleranzbedingungen gerecht werdende Bearbeitung der Werkstücke ermöglicht wird. Außerdem soll eine Vorrichtung geschaffen werden, die eine einfache, rationelle Durchführung dieses Verfahrens erlaubt.

Die Erfindung löst diese Aufgabe dadurch, daß das Werkstück zusätzlich zumindest zwischen zwei Kurbelwangen axial gegen eine biegebedingte Lageänderung dieser Kurbelwangen verspreizt wird. Da sich bei einem Durchbiegen der Kurbelwelle die Kurbelwangen aus ihrer achsnormalen Lage heraus schrägstellen, wird durch ein Verspreizen der Kurbelwangen gegen ein solches Schrägstellen gewissermaßen eine innere Abstützung des Werkstückes in axialer Richtung erreicht, wodurch ein Verbiegen der Kurbelwelle so weit unterbunden werden kann, daß die gegebenenfalls noch auftretende Restbiegung vernachlässigbar klein bleibt. Das Fehlen einer merkbaren Werkstückdurchbiegung führt dann auch zu einer exakten Bearbeitung, wobei insbesondere die genaue Lage der Kurbelwangen gewährleistet ist und ein Hängen der Wangenflächen vermieden wird.

Günstig ist es, wenn das Werkstück im Bereich einer radialen Abstützung auch axial verspreizt wird, da so durch diese gemeinsame Abstützstelle nicht nur eine Durchbiegung an der Abstützstelle selbst zu verhindern ist, sondern auch einer Durchbiegung im nicht direkt abgestützten Werkstückbereich entgegengewirkt werden kann und ausreichend Platz für einen wunschgemäßen Werkzeugeinsatz frei bleibt.

Eine einfache Vorrichtung zum axialen Verspreizen der Kurbelwellen weist nach einer Weiterbildung der Erfindung zwei zwischen die Kurbelwangen einführbare, in Richtung der Werkstückachse schwimmend auf einem Träger gelagerte Spreizbacken auf, die mittels eines Stelltriebes gegensinnig verstellbar und über eine Klemmeinrichtung od. dgl. in Spreizstellung fixierbar sind. Diese schwimmend geführten Spreizbacken können auch an unbearbeitete Kurbelwangen angesetzt werden und stützen diese Wangen axial gegen eine Verbiegung der Kurbelwelle durch die umlaufenden Bearbeitungskräfte ab. Da die Spreizbacken nur ein Zusammendrücken der Kurbelwangen verhindern sollen, bei einem Aufbiegen aber nicht nachdrücken dürfen, werden die Spreizbacken über den Stelltrieb nur mit geringer Vorspannung gesetzt und außerdem in der Spreizstellung fixiert.

Eine zweckmäßige Konstruktion für den Stelltrieb ergibt sich dadurch, daß die Spreizbacken einander zugekehrte Keilflächen aufweisen, zwischen die ein Stellkeil des Stelltriebes eindrückbar ist, welcher Stellkeil in Verstellrichtung der Spreizbacken verschiebbar am Kopf eines im Träger geführten Stempels sitzt. Auf mechanischem Wege können hier die Spreizbacken mit gewünschter Vorspannung auseinandergedrückt werden, wobei durch entsprechende Neigung der Keilflächen für eine Selbsthemmung und für die selbständige Aufrechterhaltung des Spreizeffektes gesorgt werden kann. Die Verschiebbarkeit des Stellkeiles relativ zum Stempel bringt die schwimmende Lagerung der Spreizbacken mit sich und erlaubt das gleichmäßige Setzen der Backen auch bei rohen Wangenflächen.

Ist erfindungsgemäß der vorzugsweise hydraulisch betätigbare Stempel durch die Klemmeinrichtung gegenüber dem Träger lagefixierbar, werden ein ungewolltes Nachrücken der Spreizbacken und Aufweiten der Kurbelwangen über die Spreizstellung hinaus unmöglich und außerdem wird auch ein eventuell vibrationsbedingtes Lockern der Selbsthemmung für die axiale Spreizung sicher verhindert.

In einer besonders vorteilhaften Ausgestaltung der Erfindung ist der Träger auf einer Lünette zur radialen Abstützung des Werkstückes montiert, sodaß diese eine Lünette sowohl zur radialen Abstützung als auch zur axialen Spreizung des Werkstückes geeignet ist.

Dient dabei erfindungsgemäß als Träger eine um eine zur Werkstückachse parallele Achse schwenkbare Klemmbacke der Lünette, kann diese mit anderen Lünettenbacken das Werkstück auf einem Zapfen spannende Klemmbacke in ihrer Eigenschaft als Träger für die Spreizbacken beim Setzen gleichzeitig auch die Spreizbacken in die ihnen zugeordnete Position zwischen zwei Kurbelwangen bringen, so daß das Werkstück nach dem Beaufschlagen der Spreizbacken sofort radial und axial abgestützt ist. Aus Platzgründen eignet sich zur Aufnahme der Spreizbacken eine Lünette zur Abstützung von Hubzapfen, doch ist es je nach Ausgestaltung der Kurbelwelle und Platzverhältnissen durchaus auch möglich, die Spreizbacken auf einer Lünette zum Abstützen von Lagerzapfen zu montieren.

In der Zeichnung ist der Erfindungsgegenstand in einem Ausführungsbeispiel rein schematisch dargestellt, und zwar zeigen

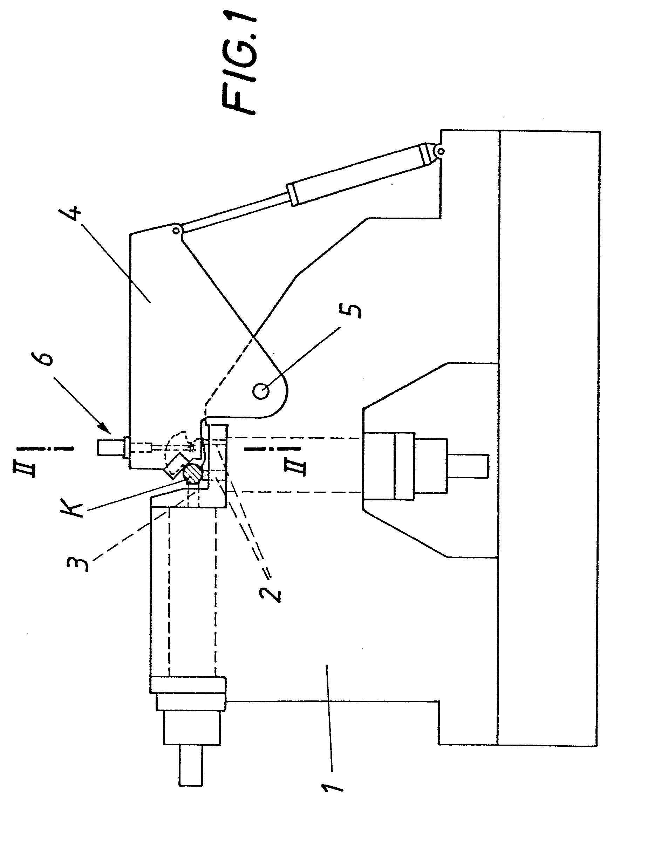

Fig. 1 eine erfindungsgemäße Lünette zur radialen und axialen Abstützung des Werkstückes in Stirnansicht,

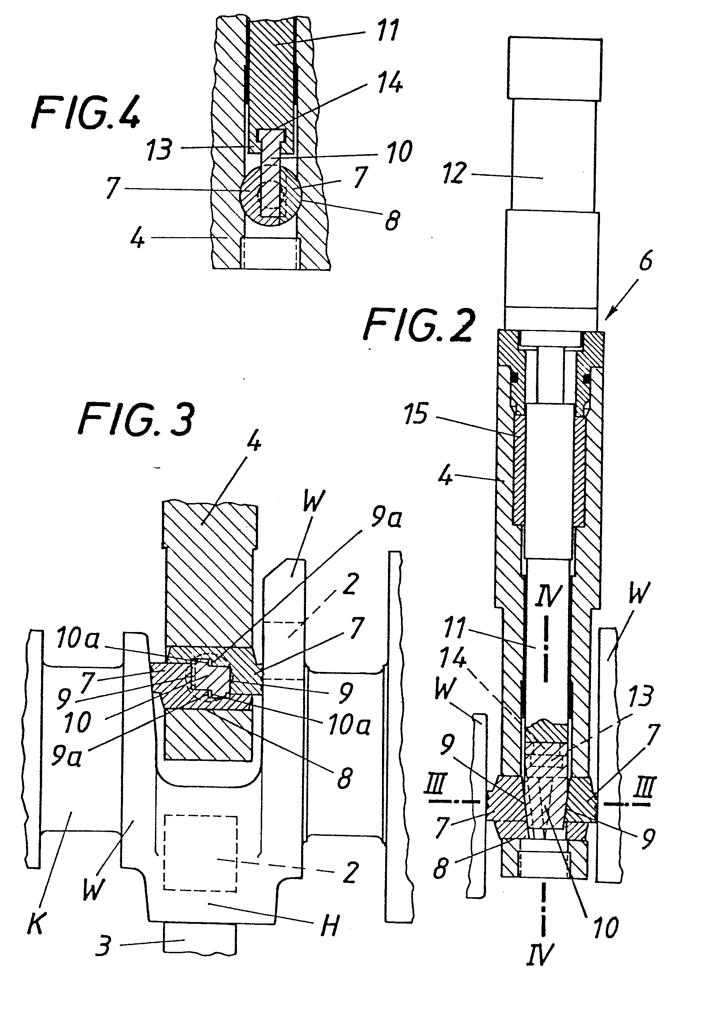

Fig. 2 einen Schnitt nach der Linie II-II der Fig. 1 durch die Spreizeinrichtung in größerem Maßstab,

Fig. 3 einen Querschnitt nach der Linie III-III der Fig. 2 und

Fig. 4 einen Längsschnitt nach der Linie IV-IV der Fig. 2.

Um eine Kurbelwelle K beispielsweise durch Fräsen mit höchster Genauigkeit bearbeiten zu können, muß vor allem ein Verbiegen der Kurbelwelle unter den auftretenden Belastungen verhindert werden. Dazu ist eine Lünette 1 vorgesehen, die mit unabhängig voneinander betätigbaren Stützbacken 2, 3 und einer Klemmbacke 4 die Kurbelwelle K im Bereich eines Hubzapfens H spannt und die Kurbelwelle K dadurch radial abstützt. Die Klemmbacke 4 ist um ein zur Kurbelwellenachse parallelachsiges Schwenklager 5 schwenkbar, so daß ein Öffnen dieser Klemmbacke 4 die Lünette 1 nach oben hin öffnet und ein Werkstückwechseln erlaubt.

Um einer Durchbiegung der Kurbelwelle K auch außerhalb des eigentlichen radialen Abstützbereiches der Lünette 1 entgegenzuwirken, wird die Kurbelwelle K zwischen zwei Kurbelwangen W axial verspreizt, wozu die Klemmbacke 4 der Lünette 1 als Träger für eine Spreizeinrichtung 6 dient. Diese Spreizeinrichtung 6 umfaßt zwei gegensinnig in Achsrichtung der Kurbelwelle K verstellbare Spreizbacken 7, die in einer Führungsbohrung 8 der Klemmbacke 4 sitzen. Die Spreizbacken 7 bilden einander zugekehrte Keilflächen 9, zwischen die ein Stellkeil 10 zum Aufspreizen der Spreizbacken 7 eindrückbar ist. Der Stellkeil 10 wird außerdem von den Spreizbacken 7 mit einer zu den Keilflächen 9 parallelen Rückenfläche 9a teilweise umgriffen, so daß der ebenfalls entsprechende Gegenflächen 10a aufweisende Stellkeil auch beim Zurückziehen die Spreizbacken 7 wieder mitnimmt.

Zur Betätigung des Stellkeiles 10 ist in der Klemmbacke 4 ein Stempel 11 mit einem entsprechenden Stellzylinder 12 eingesetzt und dieser Stempel 11 nimmt an seinem Kopf 13 den Stellkeil 10 in einer zur Kurbelwellenachse parallelen Führung 14 auf, so daß durch die Verschiebbarkeit des Stellkeiles 10 die Spreizbacken 7 in der Klemmbacke 4 schwimmend lagern und daher auch bei einem Setzen zwischen rohen Kurbelwangen W ein gleichmäßiges axiales Abstützen gewährleisten. Der durch die Keilflächen 9 und den Stellkeil 10 gegebene Keiltrieb ist selbsthemmend ausgebildet, so daß die Spreizung auch ohne Rückwirkung auf den Stempel 11 aufrechterhalten bleibt und außerdem ist für den Stempel 11 eine Klemmeinrichtung 15 vorgesehen, die nach dem Setzen der Spreizbacken 7 den Stempel 11 fixiert, um ein unerwünschtes Aufspreizen der Kurbelwangen W während des Schnittkraftumlaufes zu verhindern.

Wird die Lünette 1 durch entsprechende Druckbeaufschlagung der Stützbacken 2, 3 und das Zuschwenken der Klemmbacke 4 gesetzt, werden mit der Klemmbacke 4 gleichzeitig auch die Spreizbacken 7 zwischen zwei Kurbelwangen W eingeführt und können durch Betätigung des Stellzylinders 12 ausgefahren werden. Sind die Spreizbacken 7 in Spreizstellung, in der sie die Kurbelwangen W mit geringer Vorspannung axial abstützen, wird der Stempel 11 mit der Klemmeinrichtung 15 fixiert und die Lünette 1 ist in der Lage, die Kurbelwelle K durch ihre Stütz- und Klemmbacken 2, 3, 4 radial und durch die Spreizbacken 7 axial abzustützen. Die axiale Abstützung erlaubt dabei einer Werkstückdurchbiegung unter Gewichts- und Schnittbelastung auch in einem größeren, nicht radial abgestützten Wellenbereich erfolgreich entgegenzuwirken und dadurch eine Bearbeitung engster Toleranzen zu ermöglichen.

- 8 -

Patentansprüche :

1. Verfahren zum spanenden Bearbeiten von Kurbelwellen (K), bei dem das Werkstück zur Aufnahme der auftretenden Kräfte in den Endbereichen gespannt und vorzugsweise an wenigstens einer weiteren Stelle radial abgestützt wird, dadurch gekennzeichnet, daß das Werkstück (K) zusätzlich zumindest zwischen zwei Kurbelwangen (W) axial gegen eine biegebedingte Lageänderung dieser Kurbelwangen (W) verspreizt wird.

2. Verfahren nach Anspruch 1, dadurch gekennzeichnet, daß das Werkstück (K) im Bereich einer radialen Abstützung auch axial verspreizt wird.

3. Vorrichtung zum Durchführen des Verfahrens nach Anspruch 1 oder 2, gekennzeichnet durch zwei zwischen die Kurbelwangen (W) einführbare, in Richtung der Werkstückachse schwimmend auf einem Träger (4) gelagerte Spreizbacken (7), die mittels eines Stelltriebes (10, 11, 12) gegensinnig verstellbar und über eine Klemmeinrichtung (15) od. dgl. in Spreizstellung fixierbar sind.

4. Vorrichtung nach Anspruch 3, dadurch gekennzeichnet, daß die Spreizbacken (7) einander zugekehrte Keilflächen (9) aufweisen, zwischen die ein Stellkeil (10) des Stelltriebes eindrückbar ist, welcher Stellkeil (10) in Verstellrichtung der Spreizbacken (7) verschiebbar am Kopf (13) eines im Träger (4) geführten Stempels (11) sitzt.

5. Vorrichtung nach Anspruch 4, dadurch gekennzeichnet, daß der vorzugsweise hydraulisch betätigbare Stempel (11) durch eine Klemmeinrichtung (15) gegenüber dem Träger (4) lagefixierbar ist.

6.     Vorrichtung nach einem der Ansprüche
3 bis 5, dadurch gekennzeichnet, daß der Träger
(4) auf einer Lünette (1) zur radialen Abstützung des Werkstückes (K) montiert ist.

7.     Vorrichtung nach Anspruch 6, dadurch gekennzeichnet, daß als Träger eine um eine zur
Werkstückachse parallele Achse schwenkbare Klemmbacke (4) der Lünette (1) dient.

FIG.1

*FIG.4*

11

14

13

10

7

7

8

4

*FIG.2*

12

6

15

4

11

14

13

W

W

7

9

9

7

8

10

IV

IV

III

III

*FIG.3*

4

W

9a

2

7

10a

7

9

9

10a

10

8

9a

2

K

W

3

H

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | US-A-2 848 849 (BALSINGER)<br>* Spalte 1, Zeilen 23-59; Figuren 1,2 * | 1-3,5 | B 23 Q 1/24<br>B 24 B 5/42 |
| A | | 4 | |
| | --- | | |
| X | US-A-2 820 332 (SNIJDER)<br>* Spalte 1, Zeilen 68-72; Spalte 2, Zeilen 1-23; Figuren 2,3 * | 1-3,5 | |
| A | | 4 | |
| | --- | | |
| X | US-A-2 559 431 (HOLLENGREEN)<br>* Spalte 3, Zeilen 3-70; Figuren 1,2 * | 1 -3,5 | |
| A | | 4 | RECHERCHIERTE SACHGEBIETE (Int. Cl. 4) |
| | --- | | B 23 Q 1/00 |
| X | US-A-2 723 504 (ALVORD)<br><br>* Spalte 5, Zeilen 22-38; Figur 1 * | 1-3,5-<br>7 | B 23 B 5/00<br>B 23 C 3/00<br>B 24 B 5/00 |
| | --- | | |
| A | US-A-2 809 472 (HAPPEL) | | |
| | --- | | |
| A | US-A-2 693 062 (SILVEN) | | |
| | ---     -/- | | |

Der vorliegende Recherchenbericht wurde für alle Patentansprüche erstellt

| Recherchenort | Abschlußdatum der Recherche | Prüfer |
|---|---|---|
| DEN HAAG | 26-08-1985 | BOGAERT F.L. |

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-2 693 061 (FRED) | | |

----

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 26-08-1985 | BOGAERT F.L. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

&  : Mitglied der gleichen Patentfamilie, übereinstimmendes Dokument

EPA Form 1503 03 82